# EUROPÄISCHE PATENTSCHRIFT

(11) **EP 1 862 377 B1**
(45) Veröffentlichungstag und Bekanntmachung des Hinweises auf die Patenterteilung: **09.06.2010**
(21) Anmeldenummer: 07008996.6
(22) Anmeldetag: 04.05.2007
(51) Int. Cl.: B62D 21/15, B60R 19/34

(54) **Kraftfahrzeugkarosserie für ein Kraftfahrzeug**
Vehicle body for a motor vehicle
Carrosserie pour un véhicule automobile

(30) Priorität: 02.06.2006 DE 102006025854
(43) Veröffentlichungstag der Anmeldung: 05.12.2007
(73) Patentinhaber: GM Global Technology Operations, Inc., Detroit, MI 48265-3000 (US)
(72) Erfinder: Braunbeck, Bardo, 55276 Oppenheim (DE); Hock, Theobald, 63762 Grossostheim (DE); Nguyen, Viet-Hung, 65205 Wiesbaden (DE)
(74) Vertreter: Strauss, Peter

(56) Entgegenhaltungen:
- EP-A- 1 707 444
- EP-A- 1 854 675
- DE-A1- 4 209 826
- DE-A1-102005 021 661
- FR-A- 2 876 645

## Beschreibung

Die Erfindung betrifft eine Kraftfahrzeugkarosserie für ein Kraftfahrzeug mit einem rohrförmigen, aus Stahl gefertigten Längsträger und mit einer aus Leichtmetall gefertigten Crashbox, wobei die Crashbox an einem in Fahrtrichtung weisenden Ende des Längsträgers befestigt ist, wobei die Crashbox und der Längsträger von einem Adapterelement getrennt sind, und wobei das Adapterelement mit dem Längsträger und mit der Crashbox verbunden ist.

Eine solche Kraftfahrzeugkarosserie ist in der FR-A-2 876 645 beschrieben.

Solche Kraftfahrzeugkarosserien werden bei heutigen Kraft-fahrzeugen häufig eingesetzt und sind aus der Praxis be-kannt. Die Crashbox dient bei einem Frontalaufprall des Kraftfahrzeuges zum Abbau der Aufprallenergie. Meist ist die Crashbox zur Erreichung eines möglichst geringen Ge-wichts aus Aluminium gefertigt, während der Längsträger aus Stahl besteht. Hierdurch besteht die Gefahr einer Kontakt-korrosion zwischen der Crashbox und dem Längsträger. Daher wird üblicherweise die aus Aluminium gefertigte Crashbox erst nach der Lackierung der aus Stahl gefertigten Bauteile der Kraftfahrzeugkarosserie montiert.

Der Erfindung liegt das Problem zugrunde, eine Kraftfahr-zeugkarosserie der eingangs genannten Art so weiterzubil-den, dass sie eine Kontaktkorrosion zwischen der Crashbox und dem Längsträger weitgehend vermeidet und ein besonders geringes Gewicht aufweist. Weiterhin soll die Crashbox be-reits im unlackierten Karosserierohbau gefügt werden.

Dieses Problem wird erfindungsgemäß dadurch gelöst, dass das Adapterelement aus Stahl gefertigt ist und dass es an seiner der Crashbox zugewandten Seite eine Beschichtung aus einem mit dem Längsträger verschweißbaren Material hat, die eine galvanische Trennung zwischen der Aluminium-Crashbox und dem Adapterteil bewirkt.

Durch diese Gestaltung erfolgt eine galvanische Trennung der Crashbox von dem Längsträger. Hierdurch lässt sich die Crashbox aus einem Material mit einer besonders geringen Dichte fertigen und dennoch eine Kontaktkorrosion mit dem aus Stahl gefertigten Längsträger vermeiden.

Die Montage der Crashbox lässt sich daher zudem dank der Erfindung vor der Lackierung der erfindungsgemäßen Kraftfahrzeugkarosserie durchführen. Dies trägt zudem zur Verringerung der Fertigungskosten der erfindungsgemäßen Kraftfahrzeugkarosserie bei. Dank der Erfindung können die aus Stahl gefertigten Bauteile der Kraftfahrzeugkarosserie kostengünstig durch Punktschweißen verbunden werden. Das Adapterteil ist vorzugsweise an der aus Leichtmetall, insbesondere Aluminium, gefertigten Crashbox vorfixiert. Diese Vorfixierung kann durch Kleben, Nieten oder Schrauben erfolgen. Weiterhin könnte das Adapterteil beispielsweise im Bereich einer Durchgangsöffnung für eine Querverschraubung geprägt werden, um so eine formschlüssige Vorfixierung herzustellen. Die Crashbox mit dem vorfixierten Adapterteil wird dann in den Längsträger eingeschoben, bis sich die Crashbox in ihrer vorgesehen Position gegenüber dem Längsträger befindet. Anschließend erfolgt die Punktschweißverbindung der aus Stahl gefertigten Bauteile.

Die Crashbox lässt sich gemäß einer vorteilhaften Weiter-bildung der Erfindung vollständig von dem Längsträger tren-nen, wenn das Adapterelement einen im Querschnitt U-förmi-gen Abschnitt aufweist und wenn der U-förmige Abschnitt in den rohrförmigen Längsträger eingeführt ist und wenn ein Ende der Crashbox zwischen Schenkeln des U-förmigen Ab-schnitts gehalten ist. Durch diese Gestaltung wird ein un-mittelbarer Kontakt des Längsträgers mit der Crashbox von dem U-förmigen Abschnitt des Adapterelementes vermieden. Daher lassen sich Längsträger und Crashbox aus unterschied-lichen Materialien fertigen, ohne dass eine Kontaktkorro-sion zwischen den Bauteilen entsteht. Weiterhin hat hierdurch die Verbindung der Crashbox mit dem Längsträger eine besonders hohe Stabilität.

In Fahrtrichtung des Kraftfahrzeuges soll das mit dem Längsträger verbundene Ende der Crashbox zuverlässig abge-stützt werden. Die erfindungsgemäße Kraftfahrzeugkarosserie ermöglicht eine besonders zuverlässige Abstützung der Crashbox in Fahrtrichtung des Kraftfahrzeuges, wenn das Adapterelement einen von den Schenkeln des U-förmigen Abschnitts abstehenden Kragen hat und wenn sich der Kragen an dem offenen Ende des Längsträgers abstützt.

Häufig sind Crashboxen zur Erreichung eines möglichst ge-ringen Gewichts aus Aluminium gefertigt. Bei solchen aus Aluminium gefertigten Crashboxen wird gemäß einer anderen vorteilhaften Weiterbildung der Erfindung eine Kontaktkor-rosion besonders zuverlässig vermieden, wenn die Beschich-tung des Adapterelements organisch und metallhaltig ist. Denkbar wäre auch eine andere Beschichtung, solange die galvanische Trennung zwischen dem Adapterelement und der Aluminium-Crashbox gewährleistet ist und gleichzeitig die Schweißbarkeit zwischen Adapterelement und Längsträger si-chergestellt ist.

Zur Vereinfachung der Montage des Adapterelementes trägt es gemäß einer anderen vorteilhaften Weiterbildung der Erfin-dung bei, wenn das in den Längsträger hinein ragende Ende des Adapterelementes Einführschrägen aufweist.

Zur weiteren Erhöhung der Stabilität des Adapterelementes trägt es gemäß einer anderen vorteilhaften Weiterbildung der Erfindung bei, wenn das Adapterelement topfförmig gestaltet ist.

Zur weiteren Erhöhung der Stabilität der erfindungsgemäßen Kraftfahrzeugkarosserie im Bereich der Anbindung des Adap-terelementes mit angrenzenden Bauteilen trägt es bei, wenn das Adapterelement mit dem Längsträger stoffschlüssig ver-bunden ist.

Die Verbindung der Crashbox mit dem Längsträger gestaltet sich gemäß einer anderen vorteilhaften Weiterbildung der Erfindung besonders kostengünstig, wenn das Adapterelement mit dem Längsträger verschweißt ist. Damit kann die Crashbox im Karosserierohbau in einer automatischen Schweißstation gefügt werden, wobei eine tragende Schraubverbindung in der End- und Fertigmontage später manuell oder automatisch montiert werden kann.

Zur weiteren Erhöhung der Stabilität der Anbindung der Crashbox an den Längsträger trägt es gemäß einer anderen vorteilhaften Weiterbildung der Erfindung bei, wenn zumindest ein Haltebolzen die Crashbox, das Adapterelement und den Längsträger quer zur Fahrtrichtung durchdringt. Dieser Haltebolzen bildet die tragende Verbindung und kann zusätzlich zu der stoffschlüssigen Verbindung des Adapterelementes mit der Crashbox und dem Längsträger vorgesehen werden, um die vorgesehene Stabilität der erfindungsgemäßen Kraftfahrzeugkarosserie zu erzeugen. Die Verschweißung zwischen dem Längsträger und dem Adapterelement dient hauptsächlich zur Vorfixierung und Ausrichtung im Karosserierohbau und trägt ebenfalls zur Stabilität und zudem zur dauerhaften Ausrichtung der Crashbox mit dem Längsträger bei.

Eine weitere vorteilhafte Gestaltung der erfindungsgemäßen Crashbox besteht darin, dass das Adapterelement mehrteilig gestaltet ist.

Die Erfindung lässt verschiedene Ausführungsformen zu. Zur weiteren Verdeutlichung ihres Grundprinzips ist eine davon in der Zeichnung dargestellt und wird nachfolgend beschrieben. Die Zeichnung zeigt in
- Fig. 1: perspektivisch einen in Fahrtrichtung weisenden Teilbereich der erfindungsgemäßen Kraftfahrzeugkarosserie,
- Fig. 2: eine Schnittdarstellung durch einen Teilbereich der Kraftfahrzeugkarosserie aus Figur 1 entlang der Linie II - II,
- Fig. 3: eine Schnittdarstellung durch eine weitere Ausführungsform des in Figur 2 dargestellten Teilbereichs der Kraftfahrzeugkarosserie.

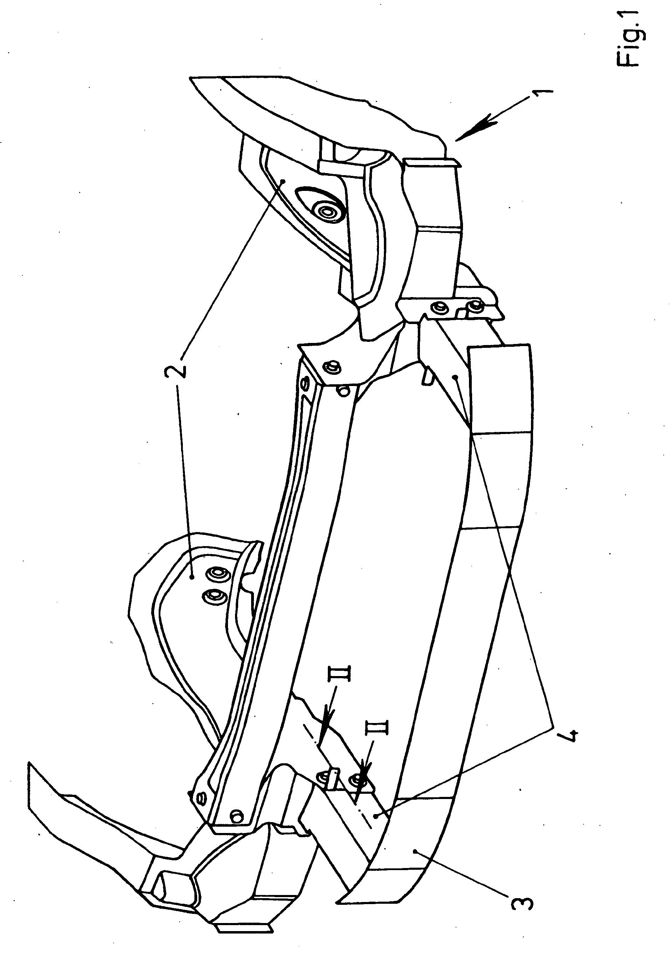

Figur 1 zeigt perspektivisch einen in Fahrtrichtung weisenden Teilbereich einer Kraftfahrzeugkarosserie 1 eines Kraftfahrzeuges mit Längsträgern 2 und mit einem Stoßfängerträger 3. Zwischen dem Stoßfängerträger 3 und den Längsträgern 2 sind Crashboxen 4 angeordnet. Die Längsträger 2 sind aus Stahl und die Crashboxen 4 aus Leichtmetall, wie beispielsweise Aluminium, gefertigt.

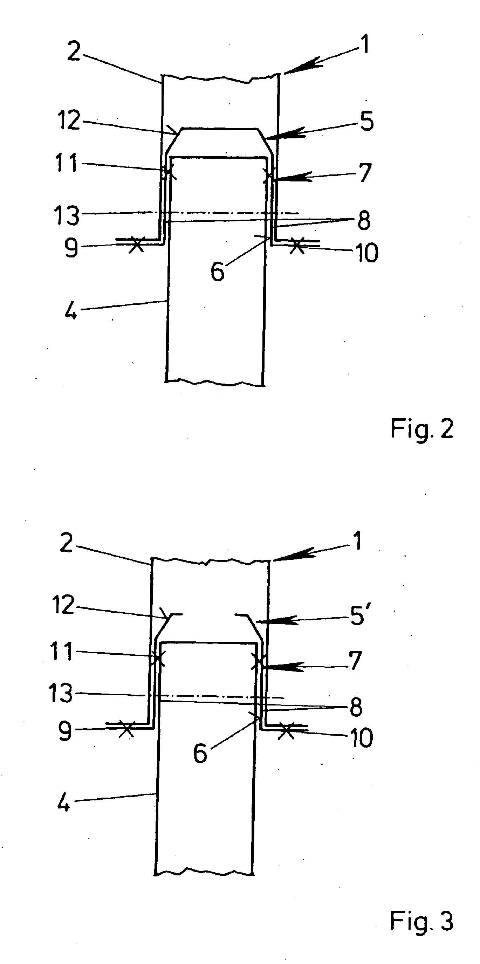

Figur 2 zeigt in einer Schnittdarstellung entlang der Linie II - II aus Figur 1 die Kraftfahrzeugkarosserie 1 im Bereich der Anbindung einer der Crashboxen 4 an einem der Längsträger 2. Ein dem Stoßfängerträger 3 aus Figur 1 abgewandtes Ende der Crashbox 4 ist in den Längsträger 2 eingeführt. Der Längsträger 2 ist hierfür rohrförmig gefertigt. Zwischen dem Längsträger 2 und der Crashbox 4 ist ein Adapterelement 5 angeordnet. Das Adapterelement 5 ist aus Stahl gefertigt und weist auf seiner der Crashbox 4 zugewandten Seite eine organische und metallhaltige, schweißbare Beschichtung 6 auf. Die organische Beschichtung 6 hat eine zum Verschweißen mit dem Längsträger 2 vorgesehene Beschaffenheit. Das Adapterelement 5 weist in dem dargestellten Schnitt einen U-förmigen Anschnitt 7 auf, mit dem es das in den Längsträger 2 hinein ragende Ende der Crashbox 4 umschließt. Schenkel 8 des U-förmigen Abschnitts 7 trennen die Crashbox 4 von dem Längsträger 2. An den freien Enden der Schenkel 8 weist das Adapterelement 5 abstehende Kragen 9 auf, mit denen es sich an dem freien Ende des Längsträgers 2 abstützt. Die Kragen 9 sind mit dem Längsträger 2 zudem mittels Schweißpunkten 10 verbunden. Die Crashbox 4 weist ebenfalls Befestigungspunkte 11 mit dem Adapterelement 5 auf. Die Befestigungspunkte 11 können durch Nieten, Clinchen, Schrauben, Kleben oder durch Verprägungen erzeugt sein. Weiterhin hat das Adapterelement 5 an seinem in den Längsträger 2 hinein ragenden Ende Einführschrägen 12. Zumindest ein Haltebolzen 13 durchdringt den Längsträger 2, das Adapterelement 5 und die Crashbox 4 quer zur vorgesehenen Fahrtrichtung des Kraftfahrzeuges.

Figur 3 zeigt eine Schnittdarstellung durch eine weitere Ausführungsform des Teilbereichs der Kraftfahrzeugkarosserie 1, welche sich von der aus Figur 2 nur dadurch unterscheidet, dass ein Adapterelement 5' mehrteilig ausgebildet ist. Die Schenkel 8 des Adapterelements 5' sind damit nicht miteinander verbunden.

### Bezugszeichenliste

- 1: Kraftfahrzeugkarosserie
- 2: Längsträger
- 3: Stoßfängerquerträger
- 4: Crashbox
- 5, 5': Adapterelement
- 6: Beschichtung
- 7: U-förmiger Abschnitt
- 8: Schenkel
- 9: Kragen
- 10: Schweißpunkt
- 11: Befestigungspunkt
- 12: Einführschrägen
- 13: Haltebolzen

## Patentansprüche

1. Kraftfahrzeugkarosserie (1) für ein Kraftfahrzeug mit einem rohrförmigen, aus Stahl gefertigten Längsträger (2) und mit einer aus Leichtmetall gefertigten Crashbox (4), wobei die Crashbox (4) an einem in Fahrtrichtung weisenden Ende des Längsträgers (2) befestigt ist, wobei die Crashbox (4) und der Längsträger (2) von einem Adapterelement (5, 5') getrennt sind, und wobei das Adapterelement (5, 5') mit dem Längsträger (2) und mit der Crashbox (4) verbunden ist, **dadurch gekennzeichnet, dass** das Adapterelement (5) aus Stahl gefertigt ist und dass es an seiner der Crashbox (4) zugewandten Seite eine Beschichtung aus einem mit dem Längsträger (2) verschweißbaren Material hat, die eine galvanische Trennung zwischen der Aluminium-Crashbox und dem Adapterteil bewirkt.

2. Kraftfahrzeugkarosserie nach Anspruch 1, **dadurch gekennzeichnet, dass** das Adapterelement (5) einen im Querschnitt U-förmigen Abschnitt (7) aufweist und dass der U-förmige Abschnitt (7) in den rohrförmigen Längsträger (2) eingeführt ist und dass ein Ende der Crashbox (4) zwischen Schenkeln (8) des U-förmigen Abschnitts (7) gehalten ist.

3. Kraftfahrzeugkarosserie nach Anspruch 2, **dadurch gekennzeichnet, dass** das Adapterelement (5) einen von den Schenkeln (8) des U-förmigen Abschnitts (7) abstehenden Kragen (9) hat und dass sich der Kragen (9) an dem offenen Ende des Längsträgers (2) abstützt.

4. Kraftfahrzeugkarosserie nach Anspruch 1, **dadurch gekennzeichnet, dass** die Beschichtung (6) des Adapterelements (5) organisch und metallhaltig ist.

5. Kraftfahrzeugkarosserie nach zumindest einem der vorhergehenden Ansprüche, **dadurch gekennzeichnet, dass** das in den Längsträger (2) hinein ragende Ende des Adapterelementes (5) Einführschrägen (12) aufweist.

6. Kraftfahrzeugkarosserie nach zumindest einem der vorhergehenden Ansprüche, **dadurch gekennzeichnet, dass** das Adapterelement (5) topfförmig gestaltet ist.

7. Kraftfahrzeugkarosserie nach zumindest einem der vorhergehenden Ansprüche, **dadurch gekennzeichnet, dass** das Adapterelement (5, 5') mit der dem Längsträger (2) stoffschlüssig verbunden ist.

8. Kraftfahrzeugkarosserie nach Anspruch 7, **dadurch gekennzeichnet, dass** das Adapterelement (5, 5') mit dem Längsträger (2) verschweißt ist.

9. Kraftfahrzeugkarosserie nach einem der Ansprüche 1 bis 6, **dadurch gekennzeichnet, dass** zumindest ein Haltebolzen (13) die Crashbox (4), das Adapterelement (5, 5') und den Längsträger (2) quer zur Fahrtrichtung durchdringt.

10. Kraftfahrzeugkarosserie nach zumindest einem der vorhergehenden Ansprüche, **dadurch gekennzeichnet, dass** das Adapterelement (5') mehrteilig ausgebildet ist.

## Claims

1. A motor vehicle body (1) for a motor vehicle, comprising a tubular side member (2) made of steel and a crashbox (4) made of light metal, with the crashbox (4) being fastened to an end of the side member (2) facing in the direction of travel, with the crashbox (4) and the side member (2) being separated by an adapter element (5, 5'), and with the adapter element (5, 5') being connected with the side member (2) and the crashbox (4), **characterized in that** the adapter element (5) is made of steel and on its side facing the crashbox (4) it has a coating made of a material that can be welded together with the side member (2), thus causing an electrical isolation between the aluminium crashbox and the adapter part.

2. A motor vehicle body according to claim 1, **characterized in that** the adapter element (5) has a section (7) which is U-shaped in its cross section and the U-shaped section (7) is inserted into the tubular side member (2) and one end of the crashbox (4) is held between legs (8) of the U-shaped section (7).

3. A motor vehicle body according to claim 2, **characterized in that** the adapter element (5) comprises a collar (9) which protrudes from the legs (8) of the U-shaped section (7) and the collar (9) rests on the open end of the side member (2).

4. A motor vehicle body according to claim 1, **characterized in that** the coating (6) of the adapter element (5) is organic and contains metal.

5. A motor vehicle body according to at least one of the preceding claims, **characterized in that** the end of the adapter element (5) which protrudes into the side member (2) comprises lead-in chamfers (12).

6. A motor vehicle body according to at least one of the preceding claims, **characterized in that** the adapter element (5) is arranged in the manner of a pot.

7. A motor vehicle body according to at least one of the preceding claims, **characterized in that** the adapter element (5, 5') is materially connected with the side member (2).

8. A motor vehicle body according to claim 7, **characterized in that** the adapter element (5, 5') is welded together with the side member (2).

9. A motor vehicle body according to one of the claims 1 to 6, **characterized in that** at least one retaining bolt (13) penetrates the crashbox (4), the adapter element (5, 5') and the side member (2) transversally to the direction of travel.

10. A motor vehicle body according to at least one of the preceding claims, **characterized in that** the adapter element (5') is designed in multiple parts.

## Revendications

1. Carrosserie de véhicule à moteur (1) pour un véhicule à moteur avec un longeron (2) tubulaire en acier et un caisson anticollision (4) fabriqué en métal léger, lequel caisson anticollision (4) est fixé à une extrémité du longeron (2) orientée dans le sens de la marche, le caisson anticollision (4) et le longeron (2) étant séparés par un élément adaptateur (5, 5') et l'élément adaptateur (5, 5') étant relié au longeron (2) et au caisson anticollision (4), **caractérisée en ce que** l'élément adaptateur (5) est fait d'acier et **en ce qu'**il possède sur son côté orienté vers le caisson anticollision (4) un revêtement fait d'un matériau pouvant être soudé avec le longeron (2), qui réalise une séparation galvanique entre le caisson anticollision en aluminium et l'élément adaptateur.

2. Carrosserie de véhicule à moteur selon la revendication 1, **caractérisée en ce que** l'élément adaptateur (5) présente une partie (7) ayant une section en forme de U et **en ce que** la partie en forme de U (7) est introduite dans le longeron (2) tubulaire et **en ce qu'**une extrémité du caisson anticollision (4) est retenue entre des bras (8) de la partie en forme de U (7).

3. Carrosserie de véhicule à moteur selon la revendication 2, **caractérisée en ce que** l'élément adaptateur (5) possède un collet (9) qui dépasse des bras (8) de la partie en forme de U (7) et **en ce que** le collet (9) s'appuie sur l'extrémité ouverte du longeron (2).

4. Carrosserie de véhicule à moteur selon la revendication 1, **caractérisée en ce que** le revêtement (6) de l'élément adaptateur (5) est organique et contient du métal.

5. Carrosserie de véhicule à moteur selon l'une au moins des revendications précédentes, **caractérisée en ce que** l'extrémité de l'élément adaptateur (5) dépassant à l'intérieur du longeron (2) possède des biseaux d'introduction (12).

6. Carrosserie de véhicule à moteur selon l'une au moins des revendications précédentes, **caractérisée en ce que** l'élément adaptateur (5) est en forme de pot.

7. Carrosserie de véhicule à moteur selon l'une au moins des revendications précédentes, **caractérisée en ce que** l'élément adaptateur (5, 5') est relié par solidarité de matière avec le longeron (2).

8. Carrosserie de véhicule à moteur selon la revendication 7, **caractérisée en ce que** l'élément adaptateur (5, 5') est soudé avec le longeron (2).

9. Carrosserie de véhicule à moteur selon l'une au moins des revendications 1 à 6, **caractérisée en ce qu'**au moins un boulon de rétention (13) traverse le caisson anticollision (4), l'élément adaptateur (5, 5') et le longeron (2) perpendiculairement au sens de la marche.

10. Carrosserie de véhicule à moteur selon l'une au moins au moins des revendications précédentes, **caractérisée en ce que** l'élément adaptateur (5') est construit en plusieurs parties.
